# EUROPEAN PATENT APPLICATION

(11) **EP 4 768 284 A1**
(43) Date of publication of application: **01.07.2026**
(21) Application number: 25224858.8
(22) Date of filing: 18.12.2025
(51) Int. Cl.: B60G 9/02, B60K 17/22, B60K 17/24, B60B 35/00, B60B 35/16, B62D 7/00

(54) **WORKING VEHICLE**

(30) Priority: 24.12.2024 JP 2024226874
(71) Applicant: Kubota Corporation, Osaka-shi, Osaka 530-0011 (JP)
(72) Inventor: SONODA, Shunsuke, Sakai-shi (JP); NITAMIZU, Hiroyuki, Sakai-shi (JP); TANOUE, Tomo, Sakai-shi (JP)
(74) Representative: Steffens, Adrian

(57) **Abstract**

A work vehicle includes a driving force transmission shaft that is disposed with an axis oriented in a front-rear direction and to which driving force of an engine is transmitted, a transmission shaft that is disposed with an axis oriented in a left-right direction and that transmits driving force from the driving force transmission shaft to left and right front wheels, a front axle case that houses the transmission shaft, and a steering cylinder that is capable of changing a turning angle of the front wheels and is provided on the front axle case so as to be positioned above the transmission shaft. (Fig. 1)

## Description

### Technical field

The disclosure relates to a technique of a working vehicle.

### Background

Conventionally, a technique of a working vehicle is known. For example, JP 2024-65152 A discloses such a configuration.

JP 2024-65152 A describes a tractor. The tractor includes a front axle mechanism including a front axle case that houses an axle of front wheels, and a steering cylinder coupled to the front axle case. The front axle mechanism changes the turning angle by expanding and contracting the steering cylinder to pivot the front wheels about a fulcrum provided in the front axle case.

Here, in the front axle mechanism as described above, depending on the position of the steering cylinder with respect to the axle, the turning angle of the front wheels with respect to the expansion/contraction amount of the steering cylinder cannot be sufficiently secured, and it may be difficult to suitably change the turning angle of the front wheel.

### Summary

One aspect of the present disclosure has been made in view of the above circumstances, and an object thereof is to provide a working vehicle capable of suitably changing a turning angle of front wheels.

The problem to be solved by one aspect of the present disclosure is as described above, and units for solving the problem will be described below.

A working vehicle according to one aspect of the present disclosure includes a driving force transmission shaft that is disposed with an axis oriented in a front-rear direction and to which driving force of an engine is transmitted, a transmission shaft that is disposed with an axis oriented in a left-right direction and that transmits driving force from the driving force transmission shaft to left and right front wheels, a front axle case that houses the transmission shaft, and a steering cylinder that is capable of changing a turning angle of the front wheels and is provided on the front axle case so as to be positioned above the transmission shaft.

According to one aspect of the present disclosure, the turning angle of the front wheels can be suitably changed.

A working vehicle according to one aspect of the present disclosure includes a vehicle body frame that supports the front axle case from above, in which in the vehicle body frame, a first recess that is recessed upward and that allows the steering cylinder to be disposed inside is formed.

According to one aspect of the present disclosure, the height of the hood of the vehicle body can be reduced.

A working vehicle according to one aspect of the present disclosure includes a suspension device that absorbs vibration transmitted from the front axle case to the vehicle body frame, in which the suspension device includes a suspension cylinder that connects the vehicle body frame and the front axle case and is disposed to be positioned in front of the first recess.

According to one aspect of the present disclosure, it is possible to suppress a decrease in rigidity of the vehicle body frame due to the provision of the first recess.

The suspension cylinder according to one aspect of the present disclosure is provided at a front end of the vehicle body frame.

According to one aspect of the present disclosure, the strength of the portion on the front side of the vehicle body frame can be improved.

A working vehicle according to one aspect of the present disclosure includes a vehicle body frame that supports the front axle case from above, in which a second recess is formed in a portion of the vehicle body frame on a rear side of the front axle case, the second recess being recessed toward a center side in a left-right direction of the vehicle body frame so as to be able to avoid interference with the front wheels.

According to one aspect of the present disclosure, the turning angle of the front wheel can be secured by avoiding interference between the vehicle body frame and the front wheel.

A working vehicle according to one aspect of the present disclosure includes a vehicle body frame that supports the front axle case from above, in which the vehicle body frame includes a cast part including a casting, and in the cast part, a guide portion capable of guiding a linear member is formed.

According to one aspect of the present disclosure, the guide portion capable of guiding the linear member can be formed using the cast part which is easily formed into a complicated shape in the vehicle body frame.

In the cast part according to one aspect of the present disclosure, a rib protruding in a predetermined direction is formed, and the guide portion is formed in a groove shape defined by the rib.

According to one aspect of the present disclosure, the guide portion can be formed using the rib that reinforces the vehicle body frame.

### Brief description of figures

- Fig. 1: is a side view illustrating an overall configuration of a tractor according to one aspect of the present disclosure;
- Fig. 2: is a perspective view illustrating a vehicle body frame, a driving force transmission shaft, a front axle case, a steering cylinder, and a suspension device of the tractor;
- Fig. 3: is a side view illustrating the vehicle body frame, the driving force transmission shaft, the front axle case, the steering cylinder, and the suspension device of the tractor;
- Fig. 4: is an exploded perspective view illustrating the vehicle body frame, the driving force transmission shaft, the front axle case, the steering cylinder, and the suspension device of the tractor;
- Fig. 5: is a perspective view illustrating the vehicle body frame;
- Fig. 6: is a plan view illustrating the vehicle body frame;
- Fig. 7: is an exploded perspective view illustrating the driving force transmission shaft, the front axle case, and the steering cylinder;
- Fig. 8: is a front view schematically illustrating the front axle case and the steering cylinder;
- Fig. 9: is a plan view schematically illustrating the front axle case and the steering cylinder;
- Fig. 10A: is a front view schematically illustrating a conventional front axle case and the steering cylinder;
- Fig. 10B: is a plan view schematically illustrating a conventional front axle case and the steering cylinder.

### Description of embodiments

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to one aspect of the present disclosure will be described.

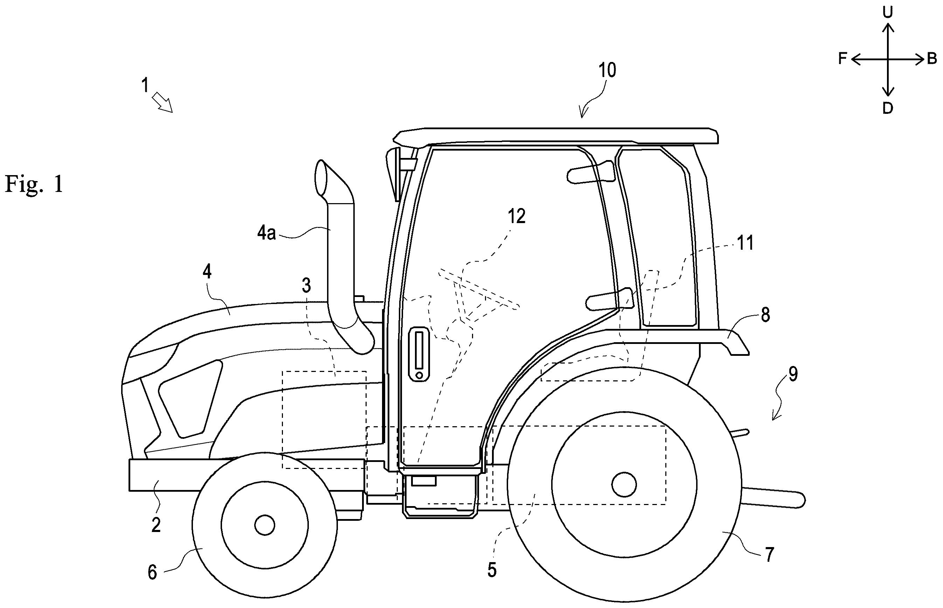

The tractor 1 illustrated in Fig. 1 mainly includes a vehicle body frame 2, an engine 3, a hood 4, a transmission case 5, front wheels 6, rear wheels 7, fenders 8, a lifting device 9, a cabin 10, a driving force transmission shaft 30, a front axle 40, a front axle case 50, a steering cylinder 60, and a suspension device 70.

The vehicle body frame 2 is a member to which the engine 3 and the like are fixed. Note that the configuration of the vehicle body frame 2 will be described in detail later. The vehicle body frame 2 is disposed at a front portion of the tractor 1. The engine 3 is covered with the hood 4. The transmission case 5 is fixed to a rear portion of the engine 3. A muffler 4a that discharges exhaust gas of the engine 3 is disposed on the right side of the hood 4.

The transmission case 5 houses a power transmission mechanism (not illustrated). In front of the transmission case 5, a clutch housing that houses a power transmission mechanism (a transmission, a clutch, and the like) (not illustrated) is provided.

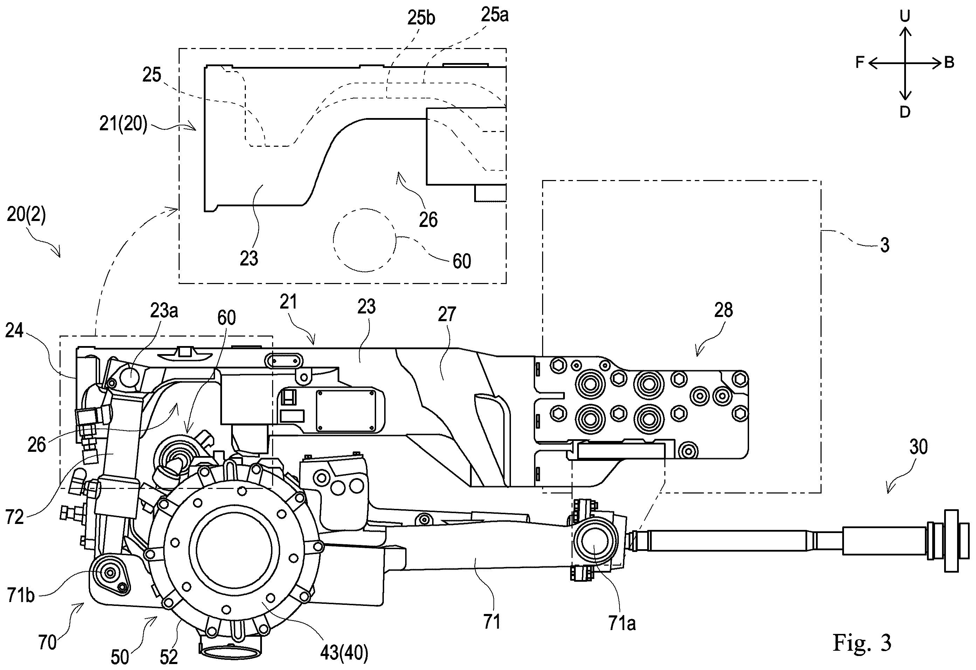

The front portion of the vehicle body frame 2 is supported by the pair of left and right front wheels 6 through a front axle mechanism (front axle case 50 and steering cylinder 60 to be described later). The front axle mechanism is coupled to the vehicle body frame 2 through the suspension device 70 to be described later (see Fig. 3). A rear portion of the transmission case 5 is supported by the pair of left and right rear wheels 7 through a rear axle mechanism (not illustrated). The pair of left and right rear wheels 7 are substantially covered from above by the fenders 8.

The lifting device 9 is provided at the rear portion of the transmission case 5. Various work devices (for example, a cultivator or the like) can be attached to the lifting device 9. The lifting device 9 can lift and lower the attached work device by an actuator such as a hydraulic cylinder.

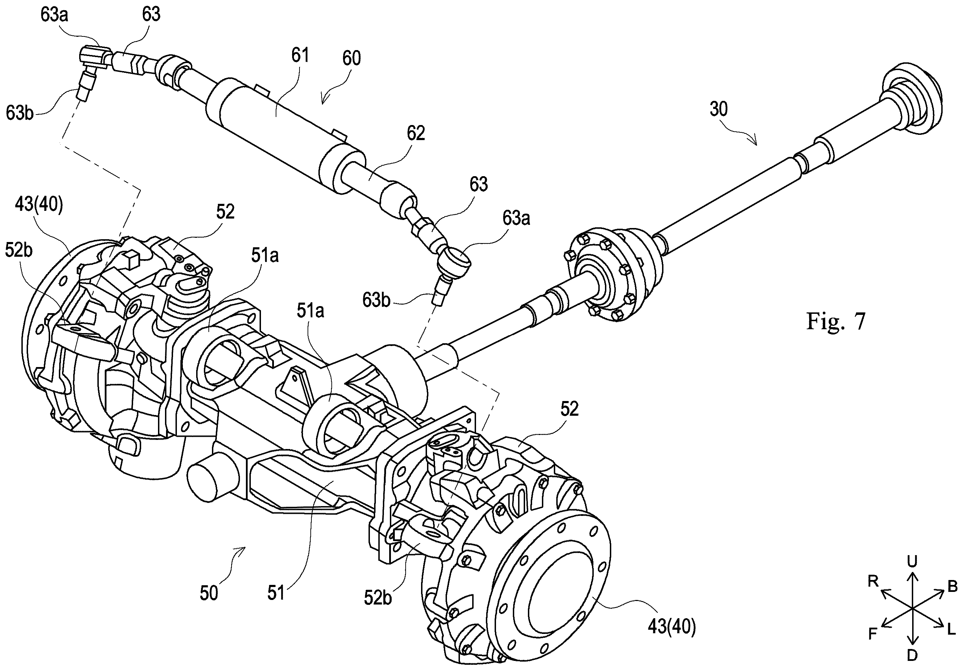

Power of the engine 3 is shifted by the transmission (not illustrated) or the like housed in the clutch housing, and then is transmitted to the front axle mechanism by a driving force transmission shaft 30 (see Fig. 7), and can be transmitted to the front wheels 6 via the front axle mechanism. Further, the power shifted by the transmission is transmitted to the rear wheel 7 via the rear axle mechanism. In this manner, the front wheels 6 and the rear wheels 7 are rotationally driven by the power of the engine 3, and the tractor 1 can travel. In addition, the work device attached to the lifting device 9 can be driven by the power of the engine 3.

The cabin 10 is provided behind the engine 3. The cabin 10 is placed on a vehicle body (such as the transmission case 5). An interior space in which an operator rides is formed inside the cabin 10. In the interior space, a seat 11 on which an operator sits is disposed. Further, a steering wheel 12 for adjusting the turning angle of the front wheels 6 is disposed in the front portion of the cabin 10. The steering cylinder 60 described later is operated according to the operation amount of the steering wheel 12, and the turning angle of the front wheels 6 is changed.

Hereinafter, configurations of the vehicle body frame 2, the driving force transmission shaft 30, the front axle 40, the front axle case 50, the steering cylinder 60, and the suspension device 70 will be described.

The vehicle body frame 2 illustrated in Figs. 3, 5, and 6 is formed in a shape elongated in a front-rear direction. In addition to the engine 3 described above, devices (battery, radiator, air cleaner, and the like) disposed inside the hood 4 are fixed to the vehicle body frame 2. The vehicle body frame 2 according to the present embodiment includes a cast part 20 that is a portion formed by casting, and a predetermined sheet metal for fixing a predetermined member to the cast part 20. The cast part 20 constitutes a main part of the vehicle body frame 2. The cast part 20 is coupled to the front axle mechanism (front axle case 50 and steering cylinder 60) through the suspension device 70 to be described later (see Fig. 3). The cast part 20 includes a first portion 21 and a second portion 28.

The first portion 21 constitutes a front-side portion of the cast part 20. On the first portion 21, a device (battery, radiator, air cleaner, and the like) disposed on the front side in the hood 4 is placed. The first portion 21 is formed in a substantially box shape that opens upward and backward. The rear portion of the first portion 21 is formed so that the vertical dimension gradually increases toward the rear (see Fig. 3). The first portion 21 includes side portions 23 and a front portion 24. The first portion 21 includes a bottom portion 25 having guide portions 25b to be described later. The first portion 21 includes a first recess 26. The first portion 21 includes a second recess 27.

The side portions 23 constitute left and right side walls of the first portion 21. The side portions 23 are formed to be long in the front-rear direction. The left and right side portions 23 are formed substantially symmetrically to each other. The side portions 23 each include a coupling portion 23a.

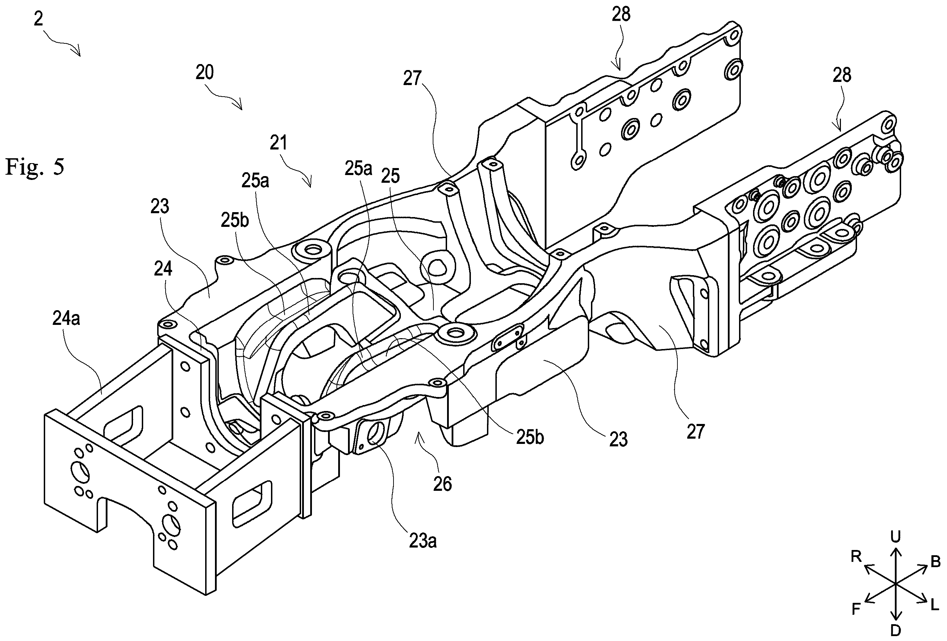

The coupling portion 23a is a portion to which an upper end of a suspension cylinder 72 described later is coupled. The coupling portion 23a is coupled to the suspension cylinder 72 through a predetermined coupling shaft whose axis is oriented in the left-right direction. A hole through which the coupling shaft is inserted is formed in the coupling portion 23a. The coupling portion 23a is provided on a surface of the left and right side portions 23 facing outward in the left-right direction. As illustrated in Figs. 3 and 5, the coupling portion 23a is provided at the front end of the side portion 23.

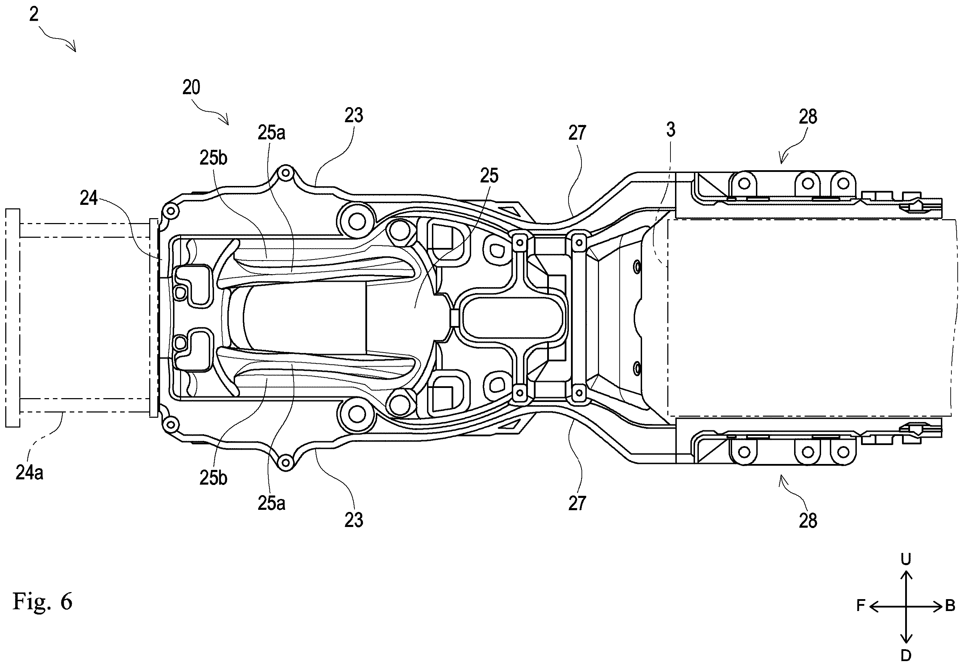

The front portion 24 illustrated in Figs. 5 and 6 constitutes a front wall of the first portion 21. The front portion 24 is formed so as to connect the front ends of the left and right side portions 23 to each other. As illustrated in Fig. 5, the front portion 24 is formed with a recess in which an upper end is notched downward. The front portion 24 can be provided with a support portion 24a for fixing a weight or the like. The support portion 24a is formed by combining sheet metals, for example.

The bottom portion 25 constitutes a bottom-side wall of the first portion 21. The bottom portion 25 has ribs 25a and guide portions 25b.

The ribs 25a are portions formed so as to protrude upward in the bottom portion 25. The ribs 25a are formed so as to extend in the front-rear direction. The ribs 25a are formed at a front-side portion of the bottom portion 25 (first portion 21). The ribs 25a are formed on both left and right sides of the front portion 24. The left and right ribs 25a are formed so as to be positioned on a center side in the left-right direction of the bottom portion 25 with a predetermined distance from the left and right side portions 23, respectively. An opening penetrating the bottom portion 25 in the vertical direction is formed between the left and right ribs 25a.

The guide portions 25b are portions capable of guiding a predetermined linear member. As the linear member, a hose connected to a predetermined cylinder (for example, steering cylinder 60 or suspension cylinder 72) or a member such as a harness or a wire connected to a predetermined device can be adopted. The guide portions 25b are formed to extend in the front-rear direction. The guide portions 25b are formed on both left and right sides of the first portion 21.

The guide portions 25b according to the present embodiment are each formed in a groove shape defined by a side portion 23, a rib 25a, and the bottom portion 25.

The first recess 26 illustrated in Figs. 3 and 5 is a portion formed so as to be recessed upward in the lower portion of the first portion 21. Note that Fig. 3 is an enlarged schematic view of a portion of the first portion 21 where the first recess 26 is formed (portion surrounded by one-dot chain line). The first recess 26 is formed in the front-side portion of the first portion 21. More specifically, the first recess 26 is formed so as to be located close to the coupling portion 23a of the side portion 23 in the front-rear direction and behind the coupling portion 23a. The first recess 26 is formed in a shape in which the steering cylinder 60 to be described later can be disposed inside. More specifically, the longitudinal dimension of the first recess 26 is formed to be larger than the longitudinal dimension of a portion (for example, a cylinder tube 61 to be described later) of the steering cylinder 60 overlapping the first portion 21 in a plan view (bottom view). Further, a vertical dimension of the first recess 26 is formed to be larger than a vertical dimension of a portion of the steering cylinder 60 overlapping the first portion 21 in plan view.

As illustrated in Figs. 3 and 5, the ribs 25a and the guide portions 25b according to the present embodiment are formed so as to straddle the first recess 26 in the front-rear direction. More specifically, the ribs 25a and the guide portions 25b are formed so as to overlap the first recess 26 in plan view. Further, the ribs 25a and the guide portions 25b are formed to be curved according to the shape of the first recess 26 in side view (see Fig. 3). With the above configuration, the portion of the cast part 20 (vehicle body frame 2) where the first recess 26 is formed can be reinforced by the rib 25a.

The second recess 27 illustrated in Figs. 3, 5, and 6 is a portion formed so as to be recessed toward the center side in the left-right direction of the cast part 20 (vehicle body frame 2). The second recess 27 is formed in a rear portion of the side portion 23. The second recess 27 is formed by curving the side portion 23. More specifically, as illustrated in Fig. 6, the left and right side portions 23 are curved such that intermediate portions in the front-rear direction are close to each other, and the second recess 27 is formed by the curved portions.

The second portion 28 constitutes a rear portion of the cast part 20. The second portion 28 is formed so as to extend rearward from the left and right side portions 23 of the first portion 21. The left and right second portions 28 are fixed to the rear ends of the left and right side portions 23 using fasteners such as bolts. The left and right second portions 28 sandwich the engine 3 in the left-right direction to fix the engine 3.

The driving force transmission shaft 30 illustrated in Figs. 3 and 7 transmits power from the engine 3 (transmission device) to the front axle 40 described later. The driving force transmission shaft 30 is formed in a substantially cylindrical shape with its axis oriented substantially in the front-rear direction. A gear (not illustrated) for transmitting a driving force (rotation) to the front axle 40, such as a bevel gear, is provided at a front end of the driving force transmission shaft 30.

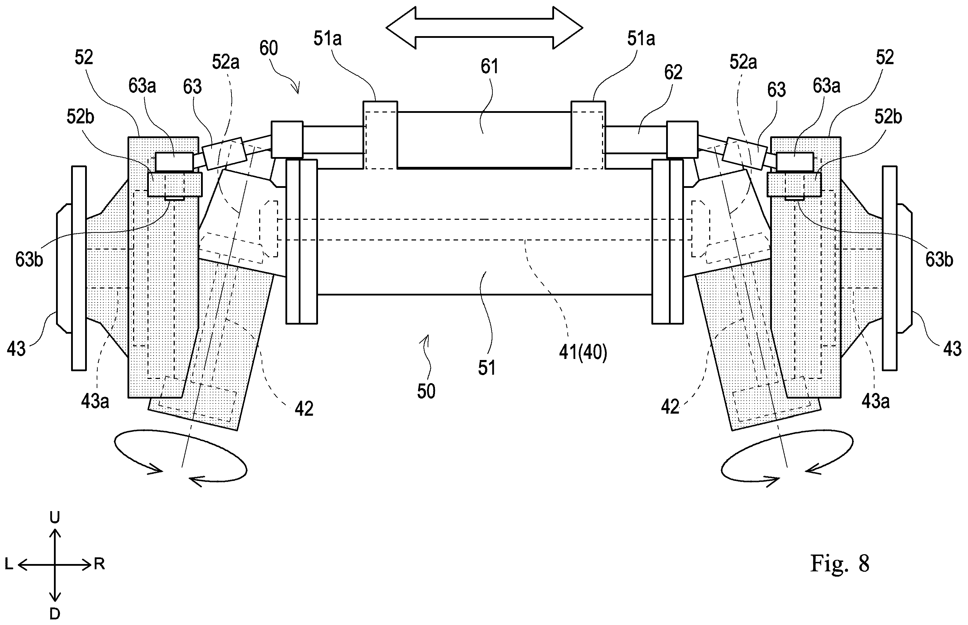

The front axle 40 illustrated in Fig. 8 constitutes an axle of the left and right front wheels 6. The front axle 40 transmits the rotation transmitted from the driving force transmission shaft 30 to the left and right front wheels 6. The front axle 40 includes a transmission shaft 41, connection shafts 42, and fixing portions 43. Note that various gears for transmitting the rotation can be provided in the transmission shaft 41, the connection shafts 42, and the fixing portions 43.

The transmission shaft 41 is a portion to which the driving force from the driving force transmission shaft 30 is transmitted. The transmission shaft 41 is disposed with its axis oriented in the left-right direction.

The connection shafts 42 are portions that transmit the rotation of the transmission shaft 41 to the fixing portions 43 described later. The connection shafts 42 are each disposed with its axis oriented substantially vertically. The connection shafts 42 are provided on the left and right sides of the transmission shaft 41, one on each side.

The fixing portions 43 are portions to which the front wheels 6 are fixed. The fixing portions 43 transmit the rotation of the left and right connection shafts 42 to the left and right front wheels 6, respectively. The fixing portions 43 each have a shaft portion 43a whose axis is substantially oriented in the left-right direction. The fixing portions 43 each rotate about the shaft portion 43a by the driving force transmitted from the connection shaft 42 through the shaft portion 43a.

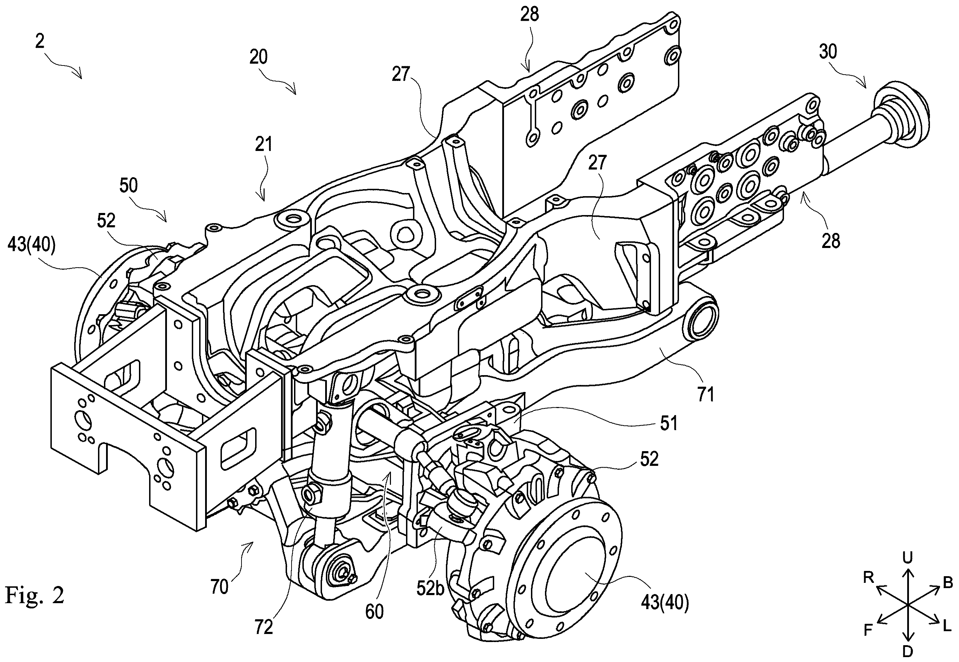

The front axle case 50 illustrated in Figs. 3, 7, and 8 houses the front axle 40. The front axle case 50 is formed in a hollow shape. The front axle case 50 constitutes a front axle mechanism together with the steering cylinder 60 to be described later. The front axle case 50 is disposed below the vehicle body frame 2. As illustrated in Figs. 2 and 3, the front axle case 50 is coupled to the vehicle body frame 2 through the suspension device 70 described later. The front axle case 50 is disposed in front of the second recess 27 in the vehicle body frame 2 (first portion 21). The front axle case 50 includes a main body portion 51 and rock units 52.

The main body portion 51 is a main structural body of the front axle case 50. The main body portion 51 is formed in a substantially cylindrical shape elongated in the left-right direction. As illustrated in Fig. 8, the transmission shaft 41 is housed in the main body portion 51. A rock member 71 of the suspension device 70 to be described later is fixed to the lower surface of the main body portion 51. The main body portion 51 includes cylinder holding portions 51a.

The cylinder holding portions 51a illustrated in Fig. 7 support the steering cylinder 60 described later. The cylinder holding portions 51a are formed in a shape opening in the left-right direction, and the steering cylinder 60 is disposed in an internal space. The cylinder holding portions 51a hold the steering cylinder 60 so as to be positioned in the first recess 26. The cylinder holding portions 51a are provided at an interval in the left-right direction so as to be positioned on both sides in the left-right direction of the main body portion 51. The cylinder holding portions 51a are provided in an obliquely front upper portion of the main body portion 51. More specifically, as illustrated in Fig. 7, the cylinder holding portions 51a are provided on a front side portion of an upper surface of the main body portion 51.

The rock units 52 each rotatably support the connection shaft 42 and the fixing portion 43 and pivot with respect to the main body portion 51. In Fig. 8, the rock units 52 are illustrated in a filled manner. As illustrated in Fig. 3, the rock units 52 are formed in a substantially circular shape in a side view. The rock units 52 are formed in a hollow shape. Inside each rock unit 52, the connection shaft 42 and the shaft portion 43a of the fixing portion 43 are housed. The rock units 52 are disposed on the left and right sides of the main body portion 51, one on each side. As illustrated in Fig. 8, each rock unit 52 is pivotally coupled to the main body portion 51 about a rock shaft 52a indicated by one-dot chain line. The rock shaft 52a is disposed with its axis substantially oriented in the vertical direction. The rock units 52 pivot with respect to the main body portion 51 by the operation of the steering cylinder 60 described later. The rock shaft 52a is disposed substantially coaxially with the connection shaft 42. The rock units 52 each include an arm 52b.

The arm 52b illustrated in Figs. 7 to 9 is a portion to which a tie rod end 63a of the steering cylinder 60 described later is connected. The arm 52b is provided so as to protrude obliquely forward and upward from the rock unit 52 (see Figs. 3 and 7).

The steering cylinder 60 illustrated in Figs. 7 to 9 can change the turning angle of the front wheels 6 according to the operation amount of the steering wheel 12. The steering cylinder 60 constitutes a power steering mechanism that assists steering using hydraulic pressure. The steering cylinder 60 includes the cylinder tube 61, a cylinder rod 62, and tie rods 63.

The cylinder tube 61 constitutes a housing of the steering cylinder 60. The cylinder tube 61 is formed in a substantially cylindrical shape elongated in the left-right direction. Oil from an appropriate pump (not illustrated) is supplied into the cylinder tube 61 through a predetermined hose. The cylinder tube 61 is held with respect to the cylinder holding portions 51a by being arranged inside the opening of the cylinder holding portions 51a.

The cylinder rod 62 moves left and right as a piston (not illustrated) is pushed by hydraulic pressure inside the cylinder tube 61. The cylinder rod 62 is formed in a shape elongated in the left-right direction. The cylinder rod 62 projects from both left and right sides of the cylinder tube 61.

The tie rods 63 transmit the motion of the cylinder rod 62 to the rock units 52. The tie rods 63 are provided on both sides of the cylinder rod 62 in the left-right direction, one on each side. The tie rods 63 connect left and right distal ends of the cylinder rod 62 and the arms 52b of the rock units 52. The tie rods 63 each include the tie rod end 63a.

The tie rod end 63a is a portion connected to the arm 52b of the rock unit 52. The tie rod end 63a is rotatably coupled to the arm 52b about a coupling shaft 63b whose axis is substantially in the vertical direction.

In the power steering mechanism including the steering cylinder 60, by driving a steering valve (not illustrated) according to the operation amount of the steering wheel 12, oil from an appropriate pump (not illustrated) is supplied to the steering cylinder 60, and the cylinder rod 62 moves in the left-right direction by the hydraulic pressure. When the motion of the cylinder rod 62 is transmitted to the rock unit 52 through the tie rod 63, the rock unit 52 pivots with respect to the main body portion 51, and the turning angle of the front wheels 6 is changed.

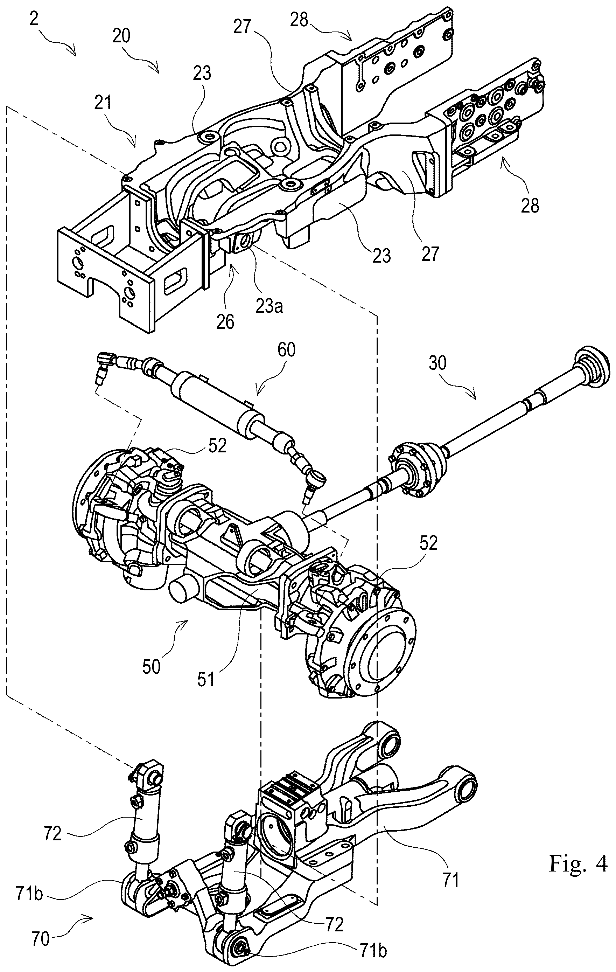

The suspension device 70 illustrated in Figs. 3 and 4 absorbs vibration transmitted from the front axle case 50 (front wheels 6) to the vehicle body frame 2. The suspension device 70 couples the front axle case 50 and the vehicle body frame 2. The suspension device 70 includes the rock member 71 and the suspension cylinder 72.

The rock member 71 is fixed to the front axle case 50 and pivotally connected to the vehicle body frame 2. The rock member 71 is formed in a shape elongated in the front-rear direction. An upper surface of the front side portion of the rock member 71 is fixed to a lower surface of the front axle case 50 (see Fig. 4). The rock member 71 includes a rock shaft 71a and a coupling portion 71b.

The rock shaft 71a illustrated in Fig. 3 is a shaft serving as a rock center of the rock member 71. The rock shaft 71a is disposed with its axis oriented in the left-right direction. The rear end of the rock member 71 and the vehicle body frame 2 are coupled through the rock shaft 71a.

The coupling portion 71b is a portion to which the lower end of the suspension cylinder 72 is coupled. The coupling portion 71b is coupled to the suspension cylinder 72 through a predetermined coupling shaft whose axis is oriented in the left-right direction. A hole through which the coupling shaft is inserted is formed in the coupling portion 23a. As illustrated in Fig. 4, the coupling portions 71b are provided on both left and right sides of the front end of the rock member 71, one on each side.

The suspension cylinder 72 absorbs vibration by flow resistance of oil fed by an appropriate pump (not illustrated). The suspension cylinder 72 absorbs vibration by extending and contracting in the vertical direction. A pair of suspension cylinders 72 is disposed so as to connect left and right sides of the vehicle body frame 2 and the rock member 71.

Specifically, as illustrated in Figs. 3 and 4, the upper end side of the suspension cylinder 72 is rotatably coupled to the coupling portion 23a of the side portion 23 of the vehicle body frame 2 through a coupling shaft. Further, the lower end side of the suspension cylinder 72 is rotatably coupled to the coupling portion 71b of the rock member 71 through a coupling shaft. As illustrated in Fig. 3, the suspension cylinder 72 is disposed so as to be positioned in front of the first recess 26. The suspension cylinder 72 is provided at the front end of the side portion 23 of the vehicle body frame 2.

Since the suspension device 70 is provided, the suspension cylinder 72 interposed between the front axle case 50 side (rock member 71) and the vehicle body frame 2 can absorb the vibration transmitted from the front axle case 50 (front wheels 6) to the vehicle body frame 2.

The configuration of the tractor 1 according to the present embodiment has been described above. In the tractor 1 as described above, the turning angle of the front wheels 6 can be suitably changed by relatively increasing the turning angle of the front wheels 6 with respect to the expansion/contraction amount of the steering cylinder 60.

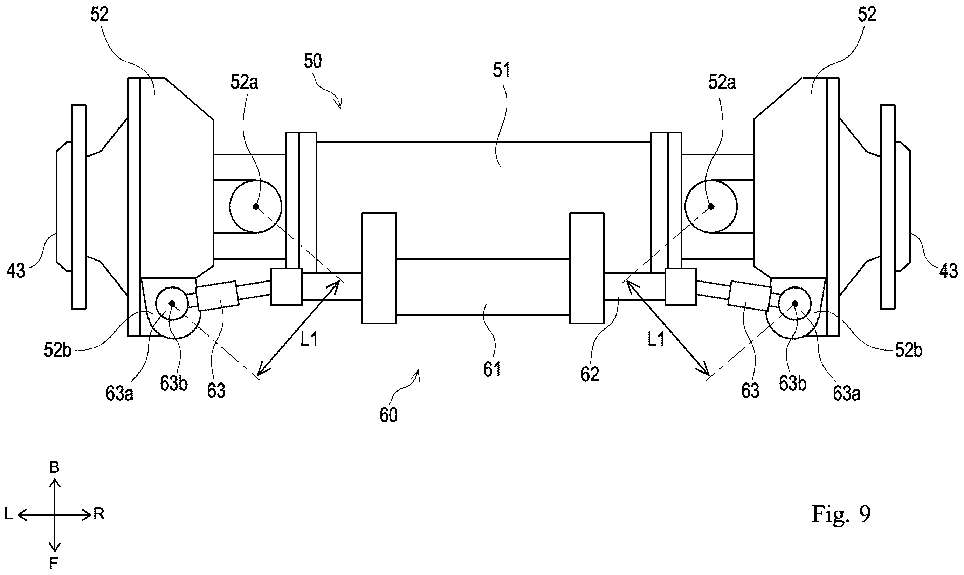

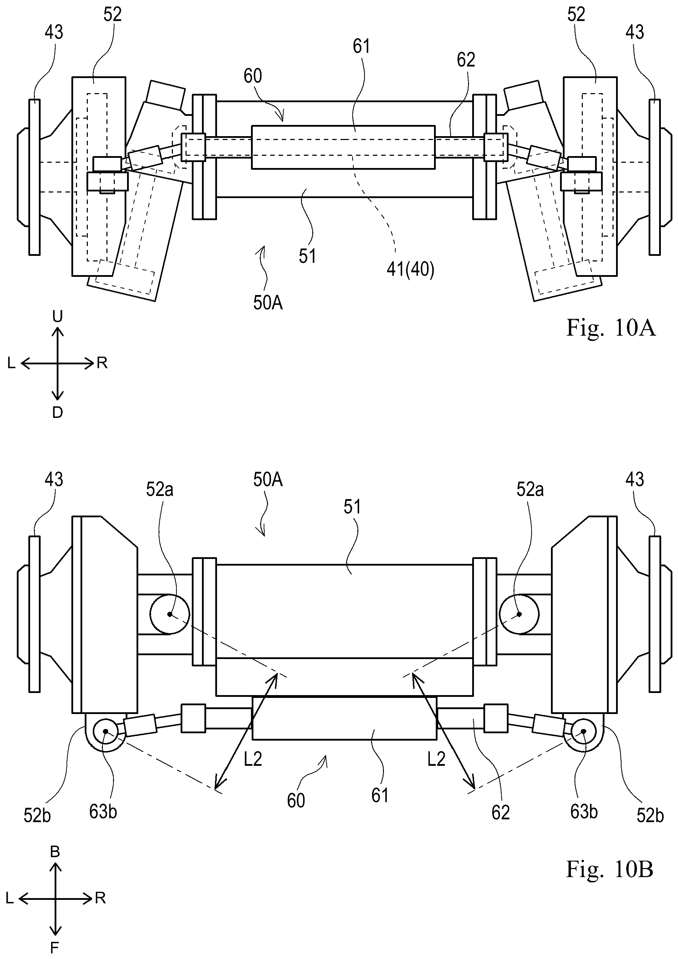

Hereinafter, effects of the tractor 1 according to the present embodiment will be described using the front axle mechanism (the front axle case 50 and the steering cylinder 60) according to the present embodiment illustrated in Figs. 8 and 9 and the front axle mechanism according to the conventional example illustrated in Figs. 10A and 10B. In the following description of the conventional example, configurations similar to those of the front axle mechanism according to the present embodiment will be described using the same reference numerals.

As illustrated in Fig. 10A, in the conventional front axle mechanism, the steering cylinder 60 is disposed at substantially the same height with respect to the transmission shaft 41 of the front axle 40. As illustrated in Fig. 10B, in the conventional example, the steering cylinder 60 is disposed at the front portion of the front axle case 50A. The arm 52b of the front axle case 50A is formed so as to protrude forward from the vertically central portion of the rock unit 52.

In the conventional example illustrated in Fig. 10B, a distance L2 between the coupling portion (coupling shaft 63b) of the steering cylinder 60 with respect to the rock unit 52 of the front axle case 50A and the fulcrum (rock shaft 52a) of the front wheels 6 is appropriately set so as to be able to avoid interference between the steering cylinder 60 and the front axle case 50.

On the other hand, as illustrated in Fig. 8, in the front axle mechanism according to the present embodiment, the steering cylinder 60 is disposed above the transmission shaft 41 of the front axle 40. With the above configuration, as illustrated in Fig. 9, while avoiding interference with the front axle case 50, the distance L1 between the coupling portion of the steering cylinder 60 with respect to the rock unit 52 (the coupling shaft 63b of the tie rod end 63a) and the fulcrum (rock shaft 52a) of the front wheels 6 can be made shorter than L2 illustrated in Fig. 10B. As a result, the turning angle of the front wheels 6 with respect to the expansion/contraction amount of the steering cylinder 60 (the movement amount of the cylinder rod 62 with respect to the cylinder tube 61) can be made relatively large, and the turning angle of the front wheels 6 can be suitably changed.

In general, in a tractor (narrow tractor) having a narrow vehicle width, it is relatively difficult to secure the amount of expansion and contraction of the steering cylinder 60 for securing the turning angle of the front wheels 6. That is, in a narrow tractor assumed to be used in a vineyard, an orchard, or the like, turning performance (a relatively large expansion/contraction amount of the steering cylinder 60) is required. The front axle mechanism according to the present embodiment can secure a relatively large turning angle of the front wheels 6 with a relatively small expansion/contraction amount of the steering cylinder 60, and thus can be suitably applied to the narrow tractor as described above.

In the tractor 1 according to the present embodiment, the vehicle body frame 2 (cast part 20) is provided with the first recess 26 in which the steering cylinder 60 can be disposed, so that the steering cylinder 60 is disposed above the transmission shaft 41, whereby the height of the hood 4 of the vehicle body can be reduced while securing the turning angle of the front wheels 6. That is, by providing the first recess 26 in the vehicle body frame 2, for example, even in a case where the suspension cylinder 72 contracts from the state illustrated in Fig. 3, it is possible to avoid interference between the vehicle body frame 2 and the steering cylinder 60. With the above configuration, the vertical distance between the vehicle body frame 2 and the steering cylinder 60 can be made relatively small, and the height of the hood 4 provided above the vehicle body frame 2 can be reduced.

In the present embodiment, the suspension cylinder 72 connects a portion of the vehicle body frame 2 in front of the first recess 26 and the rock member 71. As a result, it is possible to suppress a decrease in rigidity of the vehicle body frame 2 (cast part 20) due to the provision of the first recess 26. Furthermore, in the present embodiment, the suspension cylinder 72 is connected to the front end (coupling portion 23a) of the vehicle body frame 2. Thus, the strength of the front-side portion (front portion 24) of the vehicle body frame 2 can be improved.

Further, in the present embodiment, since the steering cylinder 60 is disposed above the transmission shaft 41, the suspension cylinder 72 can be brought close to the front axle case 50 in the front-rear direction while avoiding interference with the steering cylinder 60 (see Fig. 3), whereby the vehicle body can be made compact in the front-rear direction.

Further, in the present embodiment, since the second recess 27 is provided in the vehicle body frame 2 (cast part 20), it is possible to avoid interference of the front wheel 6 with the vehicle body frame 2. Thus, the turning angle of the front wheels 6 can be secured.

Further, in the present embodiment, the guide portions 25b are provided in the vehicle body frame 2 (cast part 20). As a result, it is possible to suitably route a linear member such as a hose for supplying oil to the steering cylinder 60 and the suspension cylinder 72 or a member such as a harness or a wire connected to a predetermined device using the guide portions 25b.

With the above configuration, the number of members can be reduced by using the vehicle body frame 2 (cast part 20) itself on which the guide portions 25b are formed as a member that guides the linear member. Furthermore, in the present embodiment, the guide portions 25b can be formed using the ribs 25a that reinforce the first recess 26 of the vehicle body frame 2.

In the present embodiment, since most of the vehicle body frame 2 is formed by the cast part 20, the vehicle body frame 2 having a complicated shape including the ribs 25a, the guide portions 25b, the first recess 26, the second recess 27, and the like can be easily formed.

As described above, the tractor 1 (working vehicle) according to the present embodiment includes:
the driving force transmission shaft 30 that is disposed with an axis oriented in a front-rear direction and to which driving force of the engine 3 is transmitted;
the transmission shaft 41 that is disposed with an axis oriented in a left-right direction and that transmits driving force from the driving force transmission shaft 30 to the left and right front wheels 6;
the front axle case 50 that houses the transmission shaft 41; and
the steering cylinder 60 that is capable of changing a turning angle of the front wheels 6 and is provided on the front axle case 50 so as to be positioned above the transmission shaft 41.

With such a configuration, the turning angle of the front wheels 6 can be suitably changed. That is, since the steering cylinder 60 is disposed above the transmission shaft 41, it is possible to relatively shorten the distance L1 between the coupling portion (coupling shaft 63b) of the steering cylinder 60 with respect to the front axle case 50 and the fulcrum (rock shaft 52a) of the front wheels 6 while avoiding interference with the front axle case 50. As a result, the turning angle of the front wheels 6 with respect to the expansion/contraction amount of the steering cylinder 60 can be made relatively large.

Further, the tractor 1 includes:
the vehicle body frame 2 that supports the front axle case 50 from above, in which in the vehicle body frame 2, the first recess 26 that is recessed upward and that allows the steering cylinder 60 to be disposed inside is formed.

With such a configuration, the height of the hood 4 of the vehicle body can be reduced. That is, by providing the first recess 26, it is possible to avoid interference between the vehicle body frame 2 and the steering cylinder 60. As a result, the vertical distance between the vehicle body frame 2 and the steering cylinder 60 can be made relatively small, and the height of the hood 4 provided on the vehicle body frame 2 can be reduced.

Further, the tractor 1 also includes:
the suspension device 70 that absorbs vibration transmitted from the front axle case 50 to the vehicle body frame 2, in which
the suspension device 70 includes the suspension cylinder 72 that connects the vehicle body frame 2 and the front axle case 50 and is disposed to be positioned in front of the first recess 26.

With such a configuration, it is possible to suppress a decrease in rigidity of the vehicle body frame 2 due to the provision of the first recess 26.

Further, the suspension cylinder 72 is provided at a front end of the vehicle body frame 2.

With this configuration, the strength of the front-side portion (front portion 24) of the vehicle body frame 2 can be improved.

Further, the tractor 1 also includes:
the vehicle body frame 2 that supports the front axle case 50 from above, in which
the second recess 27 is formed in a portion of the vehicle body frame 2 on the rear side of the front axle case 50, the second recess being recessed toward the center side in the left-right direction of the vehicle body frame 2 so as to avoid interference with the front wheels 6.

With such a configuration, it is possible to secure the turning angle of the front wheels 6 by avoiding interference between the vehicle body frame 2 and the front wheels 6.

Further, the tractor 1 also includes:
a vehicle body frame 2 that supports the front axle case from above, in which the vehicle body frame 2 includes a cast part 20 including a casting, and
in the cast part 20,
a guide portion 25b capable of guiding a linear member is formed.

With such a configuration, the guide portion 25b capable of guiding the linear member can be formed using the cast part 20 which is easily formed into a complicated shape in the vehicle body frame 2.

Further, in the cast part 20,
a rib 25a protruding in a predetermined direction is formed, and
the guide portion 25b
is formed in a groove shape defined by the rib 25a.

With such a configuration, the guide portions 25b can be formed using the rib 25a that reinforces the vehicle body frame 2.

Note that the tractor 1 according to the present embodiment is an embodiment of the working vehicle according to the disclosure.

Although one embodiment of the disclosure has been described above, the disclosure is not limited to the above configuration, and various modifications can be made within the scope of the disclosure described in the claims.

For example, the shape and the like of each member (the vehicle body frame 2, the driving force transmission shaft 30, the front axle 40, the front axle case 50, the steering cylinder 60, the suspension device 70, and the like) described in the above embodiment are merely examples, and are not limited to the above-described shape and the like. The shape and the like of each member can be changed to any shape. In addition, the arrangement of each of the above-described members can be appropriately changed.

Further, in the above embodiment, the example in which the guide portions 25b (the ribs 25a), the first recess 26, and the second recess 27 are formed in the cast part 20 has been described, but the present disclosure is not limited to such an aspect. For example, a configuration in which a part or all of the guide portions 25b, the first recess 26, and the second recess 27 are not formed can also be adopted.

Further, in the above embodiment, an example has been described in which most of the vehicle body frame 2 is formed of the cast part 20, but the present disclosure is not limited to such an aspect. For example, a part (for example, the second portion 28) or the whole of the cast part 20 illustrated in the present embodiment may be formed of a sheet metal or the like.

Further, in the above embodiment, the tractor 1 has been exemplified as the working vehicle, but the working vehicle is not limited to such an aspect. For example, the working vehicle may be another agricultural vehicle, a construction vehicle, an industrial vehicle, or the like.

## Claims

1. A working vehicle (1) comprising:
- a driving force transmission shaft (30) that is disposed with an axis oriented in a front-rear direction and to which driving force of an engine (3) is transmitted;
- a transmission shaft (41) that is disposed with an axis oriented in a left-right direction and that transmits driving force from the driving force transmission shaft (30) to left and right front wheels (6);
- a front axle case (50) that houses the transmission shaft (41); and
- a steering cylinder (60) that is capable of changing a turning angle of the front wheels (6) and is provided on the front axle case (50) so as to be positioned above the transmission shaft (41).

2. The working vehicle (1) according to claim 1, further comprising:
- a vehicle body frame (2) that supports the front axle case (50) from above, wherein
- in the vehicle body frame (2),
- a first recess (26) that is recessed upward and that allows the steering cylinder (60) to be disposed inside is formed.

3. The working vehicle (1) according to claim 2, further comprising:
- a suspension device (70) that absorbs vibration transmitted from the front axle case (50) to the vehicle body frame (2), wherein
- the suspension device (70) includes a suspension cylinder (72) that connects the vehicle body frame (2) and the front axle case (50) and is disposed to be positioned in front of the first recess (26).

4. The working vehicle (1) according to claim 3, wherein
- the suspension cylinder (72)
- is provided at a front end of the vehicle body frame (2).

5. The working vehicle (1) according to claim 1, further comprising:
- a vehicle body frame (2) that supports the front axle case (50) from above, wherein
- a second recess (27) is formed in a portion of the vehicle body frame (2) on a rear side of the front axle case (50), the second recess (27) being recessed toward a center side in a left-right direction of the vehicle body frame (2) so as to be able to avoid interference with the front wheels (6).

6. The working vehicle (1) according to claim 1, further comprising:
- a vehicle body frame (2) that supports the front axle case (50) from above, wherein
- the vehicle body frame (2) includes a cast part (20) including a casting, and
- in the cast part (20),
- a guide portion (25b) capable of guiding a linear member is formed.

7. The working vehicle (1) according to claim 6, wherein
- in the cast part (20),
- a rib (25a) protruding in a predetermined direction is formed, and
- the guide portion (25b)
- is formed in a groove shape defined by the rib (25a).
